# EUROPEAN PATENT SPECIFICATION

(11) **EP 1 084 361 B1**
(45) Date of publication and mention of the grant of the patent: **12.03.2003**
(21) Application number: 98950287.7
(22) Date of filing: 02.10.1998
(51) Int. Cl.: F16K 31/60

(54) **FLOW-RATE LIMITING DEVICE FOR MIXERS**
DURCHFLUSSBEGRENZER FÜR MISCHVENTILE
DISPOSITIF LIMITEUR DE DEBIT POUR MELANGEURS

(30) Priority: 12.06.1998 IT MI981347
(43) Date of publication of application: 21.03.2001
(73) Proprietor: Soldi, Barbara, 28010 Alzo di Pella (IT)
(72) Inventor: Soldi, Barbara, 28010 Alzo di Pella (IT)
(74) Representative: Cicogna, Franco
(86) International application number: IT9800261
(87) International publication number: WO99064774

(56) References cited:
- EP-A- 0 386 613
- DE-A- 3 211 617
- DE-U- 8 815 276

## Description

### Technical Field

The present invention relates to mixing valve-flow-rate limiting device assembly which has been specifically designed for application to mixers.

### Background Art

Conventional mixers or mixing valves, usually including ceramics discs, are broadly used in modern sanitary systems.

Actually, old fashioned faucets are increasingly replaced by the above mentioned mixers, both, because a reduced maintenance required by these mixers, and because a more accurate hot and cold water mixing afforded thereby.

In the above mentioned conventional prior mixers, a suitably contoured lever operates, as it is turned on a vertical plane, a control rod allowing the water to pass therethrough.

A further rotary displacement of the mentioned lever on the horizontal plane allows to adjust the water temperature, by suitably mixing cold and hot water.

While the above disclosed prior mixers operate rather satisfactorily, they, however, have the following drawbacks.

The water consume is excessive, and greater than that which would be actually required, since the mentioned outer control lever frequently generates an excessively broad translation displacement of the control rod, because of a comparatively great force applied by the user, thereby generating an excessively great water flow-rate not modified by the user in operation.

Accordingly, the above prior mixers frequently cause an excessive consume of hot water, and, accordingly, of power, in consequence of the excessive water flow-rate, as above disclosed.

This will in turn cause a great cost and water waste.

The documents DE-U-88 15 276 and EP-A-386613 disclose a mixing valve substantially according to the preamble of Claim 1.

### Disclosure of the Invention

Accordingly, the aim of the present invention is to overcome the above mentioned drawbacks of the prior art mixers or mixing valves.

Within the scope of the above mentioned aim, a main object of the present invention is to provide a flow-rate limiting device, specifically designed for mixing valves, which is very simple construction-wise, may be easily used on prior mixers without requiring substantial modifications of the latter, and which, moreover, is very inexpensive.

Another object of the present invention is to provide such a flow-rate limiting device-mixing valve assembly which can be easily applied or removed by a user, even on already installed mixers.

According to one aspect of the present invention, the above mentioned aim and objects, as well as yet other objects, which will become, more apparent hereinafter, have been achieved by a mixing valve according to the characterizing portion of claim 1.

The inventionprovides the following advantages.

The mixed water outlet can be controlled or adjusted very accurately, and at a well controlled flow-rate.

Actually, the water consumes will be only that required for meeting the user requirements, and the maximum flow-rate can be achieved only by an intentional command by the user and it cannot be achieved accidentally.

Accordingly, the user, by installing the flow-rate limiting device according to the invention, will achieve a very great saving of water and power.

Moreover, the subject flow- rate limiting device can be easily made in a great series production by using available apparatus, at a very low cost.

### Brief Description of the Drawings

Further characteristics, advantages and constructional details of the flow-rate limiting device-mixing valve assembly, specifically designed for mixers, according to the invention, will become more apparent hereinafter from the following disclosure, with reference to the accompanying drawings, illustrating, by way of an indicative, but not limitative, example, a preferred embodiment of the invention.

In the drawings:

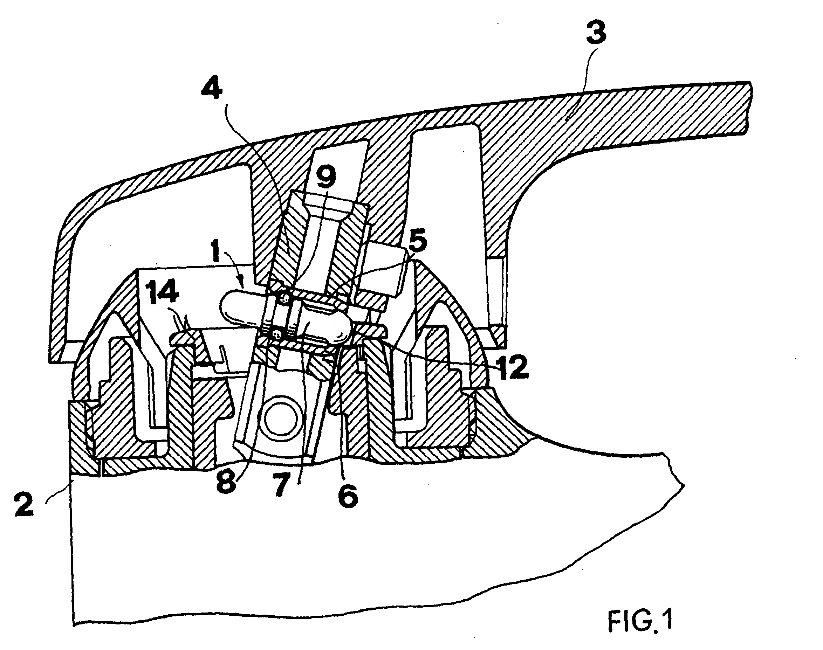

Figure 1 is a vertical cross-sectional view of a mixer assembly including the flow-rate limiting device according to the invention, in a closure condition thereof;

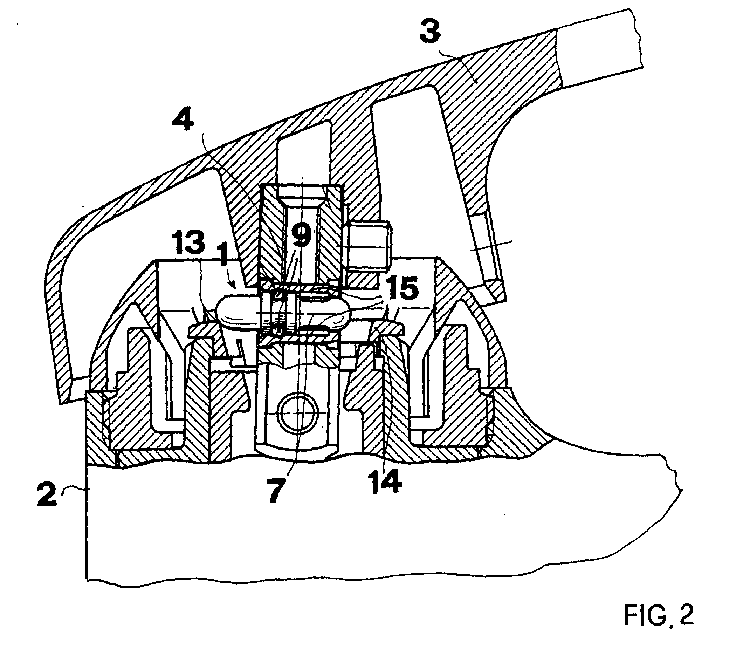

Figure 2 is a vertical cross-sectioned view of the mixing assembly shown in Figure 1, at a minimum-opening condition;

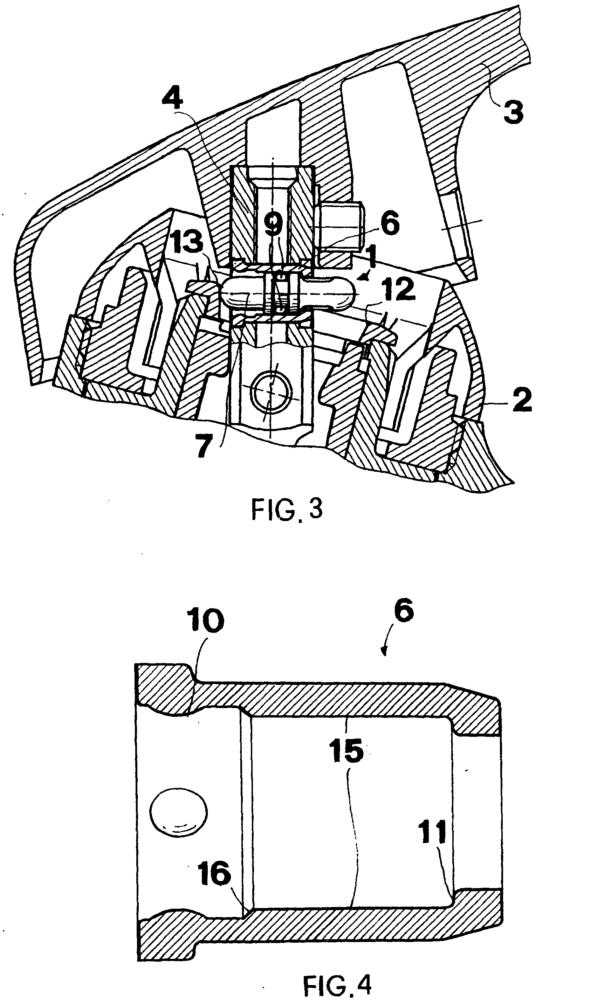

Figure 3 is a further vertical cross-sectional view of the mixing assembly shown in Figure 1, under a maximum-opening condition; and
Figure 4 is a longitudinal cross-sectional view of the outer body of the flow-rate limiting device according to the invention.

### Ways of Carrying Out the Invention

With reference to the number references of the above disclosed figures, the flow-rate limiting device 1, specifically designed for mixers, according to the present invention, comprises an outer body 6 housing therein a longitudinally sliding shaft 7, which extends for a substantial portion of said outer body 6.

The device 1 is advantageously provided for arrangement inside a mixing assembly 2, or mixing valve, of the ceramics disc type. More specifically, said device 1 is arranged inside a throughgoing hole 5 provided through a control rod 4 pertaining to the mixer 2 and being operatively coupled to an outer control lever 3.

The control rod 4, to be operated by the user through the lever 3, will allow, in a per se known manner, the assembly 2 to properly operate, and, in particular, by switching on and off the water flow and allowing to properly adjust the temperature thereof.

Inside the body of the mixer 2 an abutment ring 14 is arranged at a position slightly lower than that of the hole 5 provided through the rod 4, as said rod is assembled on the mixer 2.

The above mentioned outer body 6 is provided, through a substantial portion of the length thereof, with a cylindric portion 15 delimited, at one end thereof, by a step 11 and, at the other end thereof, by a further step 16 leading to a safety boss 10.

The latter is provided for preventing the shaft 7 from being accidentally disengaged from the outer body 6 of the device 1 in operation.

The shaft 7 is moreover provided, approximatively at a middle central portion thereof, with a recess 8 defined by a pair of circular ridges and provided for housing therein an O-ring 9, made of rubber or any other suitable like elastomeric material, which, upon introducing the shaft 7 into the outer body 6, will laterally abut against the inner wall of the cylindric portion 15.

In this connection it should be apparent that the configuration and size of the several elements constituting the subject flow-rate limiting device, specifically designed for mixers, can be varied depending on the contingent requirements, without departing from the inventive scope.

The operation of the device 1 according to the invention, inside the mixer assembly 2, can be easily deduced from the above disclosure.

Actually, at a closing condition thereof, the control lever 3 of the mixer 2 will have a horizontal arrangement, and, accordingly, the control rod 4 coupled to said lever will have a slanted attitude, whereas the shaft 7 of the device 1 will have an end thereof projecting from the outer body 6 and abutting with the abutment ring 14 at an abutment point 12.

The other end of the shaft 7 will also project from the outer body 6, but it will be not engaged by any elements.

At a minimum-opening position, the lever 3 will be slightly raised on the vertical plane, the control rod 4 assuming a substantially vertical position and the disengaged end of the shaft 7 will abut against the abutment ring 14 at an abutment point 13, whereas the previously engaged end will be free of any contacts.

In particular, as, at the point 13, the shaft 7 contacts the abutment ring 14, the control rod will assume a position allowing a minimum flow-rate water flow.

Simultaneously, the O-ring 9, by friction contacting the inner walls of the outer body 6, will prevent any accidental swinging movement of the control rod 4, thereby preventing an increase of the water flow as the user operates the lever 3 for opening the mixing valve.

For increasing the outlet water flow rate, on the other hand, the user must further rotate upwardly the lever 3 to turn the control rod 4.

This movement, however, is hindered by the shaft 7 of the device 1, since the end thereof contacting the abutment point 13 of the abutment ring 14 will be further pressed thereby tending to displace the shaft 7 inside the outer body 6, in a direction opposite to that of the control rod 4, this movement being however hindered by the friction forces generated between the mentioned O-ring 9 and the step 16 of the outer body 6.

Beyond a set displacement of the shaft 7, the mentioned O-ring 9 will contact the step 16, and will be resiliently deformed to pass said step, thereby providing a maximum opening of the mixer assembly 2.

## Claims

1. A mixing valve (2) comprising control means and a flow rate limiting device operatively coupled to said control means, whereby the flow-rate limiting device comprises an outer body (6) holding therein a longitudinally sliding shaft (7), said outer body (6) comprising a cylindric portion (15) delimited, at one end thereof, by a step (11), said sliding shaft being counterbiassed by sealing means (9) arranged thereon and abutting against a portion of the inner surface of said outer body (6) to adjust the water flow controlled by said control means, **characterized in that** said cylindric portion of said outer body (6) is delimited at the other end thereof, by a further step (16), leading to a safety boss (10).

2. A mixing valve according to Claim 1, **characterized in that** said control means comprise a control rod (4) operatively coupled to a control outer lever (3) and provided with a throughgoing hole (5) for housing therein said device (1).

3. A mixing valve according to the preceding claims, **characterized in that** the body of said mixing valve (2) comprises an abutment ring (14) alternatively engaging the ends of said shaft (7) as the control rod (4) is swingably operated for opening and closing said mixer.

4. A mixing valve according to one or more of the preceding claims, **characterized in that** said shaft (7) comprises a recess (8) therein for housing said sealing means.

5. A mixing valve according to one or more of the preceding claims, **characterized in that** said sealing means comprise an O-ring (9) made of rubber or other suitable elastomeric material.

## Patentansprüche

1. Mischventil (2) mit einem Regelungsmittel und einer betriebsmäßig mit dem Regelungsmittel verbundenen Durchflussbegrenzungsvorrichtung, wobei die Durchflussbegrenzungsvorrichtung einen Außenkörper (6) umfasst, in dem eine in Längsrichtung gleitende Welle (7) gehalten ist, wobei der Außenkörper einen an einem seiner Enden durch eine Stufe (11) begrenzten zylindrischen Abschnitt (15) umfasst, wobei die gleitende Welle durch darauf angeordnete und gegen einen Abschnitt der Innenfläche des Außenkörpers (6) anliegende Abdichtmittel zur Einstellung des durch das Regelungsmittel geregelten Wasserdurchflusses gegenbelastet ist,
**dadurch gekennzeichnet, dass**
der zylindrische Abschnitt des Außenkörpers (6) durch eine zu einem Sicherheitsvorsprung (10) führende, weitere Stufe (16) begrenzt ist.

2. Mischventil nach Anspruch 1,
**dadurch gekennzeichnet, dass**
die Regelungsmittel eine betriebsmäßig mit einem äußeren Regelungshebel (3) verbundene Regelungsstange (4) umfassen, die mit einem Durchgangsloch (5) versehen ist, um darin die Vorrichtung (1) unterzubringen.

3. Mischventil nach Anspruch 1,
**dadurch gekennzeichnet , dass**
der Körper des Mischventils (2) einen Anschlagring (14) umfasst, der alternativ die Enden der Welle (7) in Eingriff nimmt, wenn die Regelungsstange (4) mit einer Schwenkbewegung zum Öffnen und Schließen des Mischers betätigt wird.

4. Mischventil nach einem oder mehreren der vorangegangenen Ansprüche,
**dadurch gekennzeichnet , dass**
die Welle (7) eine Ausnehmung (8) umfasst, um darin das Abdichtmittel unterzubringen.

5. Mischventil nach einem oder mehreren der vorangegangenen Ansprüche,
**dadurch gekennzeichnet , dass**
die Abdichtmittel einen aus Gummi oder einem anderen geeigneten Elastomermaterial hergestellten O-Ring (9) umfassen.

## Revendications

1. Régulateur à vannes (2) comprenant un moyen de contrôle et un dispositif limiteur de débit couplé de manière active audit moyen de contrôle, où le dispositif limiteur de débit comprend un corps externe (6) maintenant un arbre (7) coulissant longitudinalement, ledit corps externe (6) comprenant une partie cylindrique (15) délimitée, à une extrémité de celle-ci, par un rebord (11), ledit arbre de coulissement étant isolé par une moyen d'étanchéité (9) disposé sur lui et butant contre une partie de la surface interne dudit corps externe (6) afin d'ajuster l'écoulement d'eau contrôlé par ledit moyen de contrôle, **caractérisé en ce que** ladite partie cylindrique dudit corps externe (6) est délimitée à l'autre extrémité de celle-ci, par un autre rebord (16), conduisant à une protubérance de sûreté (10).

2. Régulateur à vannes selon la revendication 1, **caractérisé en ce que** ledit moyen de contrôle comprend une barre de contrôle (4) couplée de manière active à un levier de contrôle externe (3) et munie d'un orfice de passage (5) pour y loger ledit dispositif (1).

3. Régulateur à vannes selon les revendications précédentes, **caractérisé en ce que** le corps dudit régufateur à vannes (2) comprend un anneau de butée (14) engagent de manière alternative les extrémités dudit arbre (7) puisque la barre de contrôle (4) est actionnée par oscillation pour ouvrir et fermer ledit mélangeur.

4. Régulateur à vannes selon l'une quelconque des revendications précédentes, **caractérisé en ce que** ledit arbre (7) comprend un creux (8) pour y loger ledit moyen d'étanchéisation.

5. Régulateur à vannes selon l'une quelconque des revendications précédentes, **caractérisé en ce que** ledit moyen d'étanchéisation comprend un anneau en forme de O (9) fabriqué en ruban ou en tout autre matériau élastomère adéquat.
